(19) Europäisches Patentamt
European Patent Office
Office européen des brevets

(11) **EP 4 296 305 A1**

(12) **EUROPEAN PATENT APPLICATION**

(43) Date of publication:
**27.12.2023   Bulletin 2023/52**

(21) Application number: **22180367.9**

(22) Date of filing: **22.06.2022**

(51) International Patent Classification (IPC):
***C08K 5/1575*** *(2006.01)*

(52) Cooperative Patent Classification (CPC):
(C-Sets available)
**C08K 5/1575;** C08K 5/0083; C08K 2201/019

(Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Basell Poliolefine Italia S.r.l.
20121 Milano (IT)**

(72) Inventors:
• **FIORAVANTI, Riccardo
  44122 Ferrara (IT)**
• **Destro, Mara
  44122 Ferrara (IT)**

(74) Representative: **LyondellBasell
c/o Basell Poliolefine Italia
Intellectual Property
P.le Donegani 12
44122 Ferrara (IT)**

(54) **PROCESS FOR RECYCLING PROPYLENE BASED POLYMERS**

(57)    A process for preparing an article containing at least 50 wt% of a recycled polypropylene composition, based on the total weight of the article, comprising:
a) providing a recycled polypropylene composition being a post industrial polypropylene composition comprising a propylene based polymer and a clarifying agent;
b) melting the post industrial polypropylene composition a) and
c) recover the final article;
wherein the clarifying agent is Bis(3,4-dimethyl-dibenzylidene sorbitol) (DMDBS) and with the proviso that no further nucleating agent are added to the composition.

EP 4 296 305 A1

(52) Cooperative Patent Classification (CPC): (Cont.)

C-Sets
**C08K 5/1575, C08L 23/14**

**Description**

FIELD OF THE INVENTION

The present disclosure relates to a process for preparing an article containing at least 50 wt% of a recycled polypropylene composition maintaining good optical properties without the need to add further clarifying agents.

BACKGROUND OF THE INVENTION

It is well known in the art that in order to recycle a propylene based composition the latter has to be melted one or more time. The melting usually worse some of the properties of the polymer such as the optical properties. In order to maintain the optical properties additives such as clarifying agent has to be added again. The applicant found that it is possible to recycle a propylene based polymer to obtain an article more time without the need to add further clyrifing agent in the polymer and substantially retaining the original haze.

SUMMARY OF THE INVENTION

Thus an object of the present disclosure is a process for preparing an article containing at least 50 wt% of a recycled polypropylene composition, based on the total weight of the article comprising:

a) providing a recycled polypropylene composition being a post industrial polypropylene composition comprising a propylene based polymer and a clarifying agent;
b) melting the post industrial polypropylene composition a) and
c) recover the final article;

Wherein the clarifying agent is Bis(3,4-dimethyl-dibenzylidene sorbitol) (DMDBS) and with the proviso that no further nucleating agent are added to the composition;

DETAILED DESCRIPTION OF THE IN VENTION

Thus an object of the present disclosure is a process for preparing an article containing at least 50 wt% of a recycled polypropylene composition, based on the total weight of the article comprising:

a) providing a recycled polypropylene composition being a post industrial polypropylene composition comprising a propylene based polymer and a clarifying agent;
b) melting the post industrial polypropylene composition a) and
c) recover the final article;

wherein the clarifying agent is Bis(3,4-dimethyl-dibenzylidene sorbitol) (DMDBS) and with the proviso that no further nucleating agent are added to the composition.
Preferably Bis(3,4-dimethyl-dibenzylidene sorbitol) (DMDBS) is added in an amount from 0.05 wt% to 5.00 wt% ; more preferably from 0.10 wt% to 3.00 wt%; even more preferably from 0.13 wt% to 1.30 wt%; the amount being calculated on the weight of the final composition.
Preferably the article prepared by the process of the present disclosure contain at least 70 wt% ; more preferably at least 90 wt%, based on the total weight of the article of recycled polypropylene composition.
The propylene based polymer is a polymer containing preferably at least 50 wt%; more preferably at least 60 wt% ; even more preferably at least 70 wt% of derived units of propylene. The remaining comonomers can be ethylene; 1-butene; 1-hexene or 1-octene derived units; ethylene being preferred. Examples of propylene based polymer can be propylene homopolymer, propylene, ethylene heterophasic polymer, propylene ethylene 1-butene, propylene ethylene 1-hexene terpolymers and mixtures thereof.
Preferably the Melt Flow Rate of the recycled polypropylene composition, determined according to the method ISO 1133 (230° C, 2.16 kg), ranges from 10 g/10 min to 150 g/10 min; preferably from 20 g/10 min to 100 g/10 min, more preferably from 25 g/10 min to 80 g/10 min.
Preferably the difference of haze (delta haze) between the haze measured after the fifth melting ranges and the haze measured after the first melting is from 0.5 to 5.0; preferably from 1.0 to 4.0 more preferably from 1.5 to 3.5.
Post-Industrial Resin (PIR) is the waste generated from the manufacturing process that is reclaimed or used again in the same material.
Post-Consumer Resin (PCR) defined as a resin used by the consumer for its intended purpose, that has reached its end of use, and then tossed into a recycling bin is excluded.

The article to be produced with the process of the present disclosure can be any article produced with the propylene based polymer such as film, sheet, pipe, injection molded object, blow molded object, roto molding object and thermoformed object.

The following examples are given to illustrate the present invention without limiting purpose.

EXAMPLE

**Characterization methods**

**Melting temperature and crystallization temperature:** Determined by differential scanning calorimetry (DSC)

. weighting 6 ±1 mg, is heated to 220 ±1° C at a rate of 20 °C/min and kept at 220 ±1 ° C for 2 minutes in nitrogen stream and it is thereafter cooled at a rate of 20°C/min to 40 ±2° C, thereby kept at this temperature for 2 min to crystallize the sample. Then, the sample is again fused at a temperature rise rate of 20° C/min up to 220° C ±1. The melting scan is recorded, a thermogram is obtained, and, from this, melting temperatures and crystallization temperatures are read.

**Melt Flow Rate:** Determined according to the method ISO 1133 (230° C, 2.16 kg).

**Xylene-soluble fraction (XS) at 25°C**

Xylene Solubles at 25°C have been determined according to ISO 16152: 2005; with solution volume of 250 ml, precipitation at 25°C for 20 minutes, 10 of which with the solution in agitation (magnetic stirrer), and drying at 70°C.

**Intrinsic Viscosity (I.V.)**

The sample is dissolved by tetrahydronaphthalene at 135 °C and then it is poured into the capillary viscometer.

The viscometer tube (Ubbelohde type) is surrounded by a cylindrical glass jacket; this setup allows temperature control with a circulating thermostated liquid.

The downward passage of the meniscus is timed by a photoelectric device. The passage of the meniscus in front of the upper lamp starts the counter which has a quartz crystal oscillator. The meniscus stops the counter as it passes the lower lamp and the efflux time is registered: this is converted into a value of intrinsic viscosity through

**Haze (on 1 mm plaque)**

According to the method used, 5x5 cm specimens are cut molded plaques of 1 mm thick and the haze value is measured using a Gardner photometric unit connected to a Hazemeter type UX-10 or an equivalent instrument having G.E. 1209 light source with filter "C". Reference samples of known haze are used for calibrating the instrument. The plaques to be tested are produced according to the following method.

$75 \times 75 \times 1$ mm plaques are molded with a GBF Plastiniector G235190 Injection Molding Machine, 90 tons under the following processing conditions:

Screw rotation speed: 120 rpm
Back pressure: 10 bar
Melt temperature: 260°C
Injection time: 5 sec
Switch to hold pressure: 50 bar
First stage hold pressure: 30 bar
Second stage pressure: 20 bar
Hold pressure profile: First stage 5 sec
Second stage 10 sec
Cooling time: 20 sec
Mold water temperature: 40°C

**Ethylene content in the copolymers**

$^{13}$C NMR spectra were acquired on a Bruker AV-600 spectrometer equipped with cryoprobe, operating at 160.91 MHz in the Fourier transform mode at 120 °C.

The peak of the $S\beta\beta$ carbon (nomenclature according to "Monomer Sequence Distribution in Ethylene-Propylene Rubber Measured by 13C NMR. 3. Use of Reaction Probability Mode " C. J. Carman, R. A. Harrington and C. E. Wilkes, Macromolecules, 1977, 10, 536) was used as an internal reference at 29.9 ppm. The samples were dissolved in 1,1,2,2-tetrachloroethane-*d2* at 120 °C with a 8 % wt/v concentration. Each spectrum was acquired with a 90° pulse, and 15 seconds of delay between pulses and CPD to remove $^1$H-$^{13}$C coupling. 512 transients were stored in 32K data points using a spectral window of 9000 Hz.

The assignments of the spectra, the evaluation of triad distribution and the composition were made according to Kakugo ("Carbon-13 NMR determination of monomer sequence distribution in ethylene-propylene copolymers prepared with $\delta$-titanium trichloride- diethyl-aluminum chloride" M. Kakugo, Y. Naito, K. Mizunuma and T. Miyatake, Macromolecules, 1982, 15, 1150) using the following equations:

$$PPP = 100\, T\beta\beta/S \qquad PPE = 100\, T\beta\delta/S \qquad EPE = 100\, T\delta\delta/S$$
$$PEP = 100\, S\beta\beta/S \qquad PEE = 100\, S\beta\delta/S \qquad EEE = 100\, (0.25\, S\gamma\delta + 0.5\, S\delta\delta)/S$$

$$S = T\beta\beta + T\beta\delta + T\delta\delta + S\beta\beta + S\beta\delta + 0.25\, S\gamma\delta + 0.5\, S\delta\delta$$

The molar percentage of ethylene content was evaluated using the following equation:

E% mol = 100 * [PEP+PEE+EEE]The weight percentage of ethylene content was evaluated using the following equation:

$$100 * E\%\, mol * MWE$$

$$E\%\, wt. = E\%\, mol * MWE + P\%\, mol * MWP$$

where P% mol is the molar percentage of propylene content, while MWE and MWP are the molecular weights of ethylene and propylene, respectively.

The product of reactivity ratio rlr2 was calculated according to Carman (C.J. Carman, R.A. Harrington and C.E. Wilkes, Macromolecules, 1977; 10, 536) as:

$$r_1 r_2 = 1 + \left(\frac{EEE + PEE}{PEP} + 1\right) - \left(\frac{P}{E} + 1\right)\left(\frac{EEE + PEE}{PEP} + 1\right)^{0.5}$$

The tacticity of Propylene sequences was calculated as mm content from the ratio of the PPP $mmT_{\beta\beta}$ (28.90-29.65 ppm) and the whole $T_{\beta\beta}$ (29.80-28.37 ppm).

Impact test: ISO 180

    **Preparation of injection molded specimens:** test specimens 80 x 10 x 4 mm were obtained according to the method ISO 1873-2:2007.
    **Preparation of injection molded specimens:** test specimens 80 x 10 x 4 mm were obtained according to the method ISO 1873-2:2007.
    **Charpy Impact test at 23°C:** measured according to ISO 179-1:2010 on injection molded specimens.

**Example 1 according to the invention**

A commercial propylene ethylene random copolymer sold by Lyondellbasell has been used as propylene based polymer. The random copolymer has the features reported on table 1

Table 1

| Ethylene content | wt% | 3.3 |
|---|---|---|
| MFR | g/10' | 40 |
| Xylene soluble at 25°C | wt% | 6 |
| Melting temperature | °C | 149 |
| Tensile Modulus | MPa | 1100 |
| Charpy impact strength 23°C | Kj/m$^2$ | 5 |
| Charpy impact strength 23°C | Kj/m$^2$ | 2.5 |

The random copolymer has been blended with the additives of table 2

Table 2

| | | Ex 1 | Comp Ex 2 |
|---|---|---|---|
| Irganox 3114 | wt% | | 0.05 |
| Iganox 1010 | wt% | 0.05 | |
| DMDBS | wt% | 0.18 | |
| NX8000 | wt% | | 0.20 |
| Irgafos 168 | wt% | 0.10 | 0.10 |
| Calcium Stearate | wt% | 0.05 | 0.05 |

NX8000 is 1,2,3-trideoxy-4,6:5,7-bis-0[(4- propylphenyl)methylene] -nonitol

The composition of Example 1 and comparative example 2 have been extruded 5 times at 230°C to simulate the recycling process. Haze has been measured in each step as reported in table 3

Table 3

| | | Ex 1 | comp Ex 2 |
|---|---|---|---|
| haze 1mm plate first melt | % | 10.40 | 10.70 |
| haze 1mm plate second melt | % | 10.60 | 14.30 |
| haze 1mm plate third melt | % | 11.80 | 15.70 |
| haze 1mm plate fifth melt | % | 12.80 | 17.50 |
| delta haze | % | 2.4 | 6.8 |

From table 3 clearly results that the haze of example 1 has been retained while the delta haze of comp example 2 is higher.

**Claims**

1. A process for preparing an article containing at least 50 wt% of a recycled polypropylene composition, based on the total weight of the article, comprising:

   a) providing a recycled polypropylene composition being a post industrial polypropylene composition comprising a propylene based polymer and a clarifying agent;
   b) melting the post industrial polypropylene composition a) and
   c) recover the final article;

   wherein the clarifying agent is Bis(3,4-dimethyl-dibenzylidene sorbitol) (DMDBS) and with the proviso that no further nucleating agent are added to the composition.

2. The process according to claim 1 wherein Bis(3,4-dimethyl-dibenzylidene sorbitol) (DMDBS) is added in an amount from 0.05 wt% to 5.00 wt%.

3. The process according to any of claims 1-2 wherein Bis(3,4-dimethyl-dibenzylidene sorbitol) (DMDBS) is added in an amount from 0.10 wt% to 3.00 wt%.

4. The process according to any of claims 1-3 wherein Bis(3,4-dimethyl-dibenzylidene sorbitol) (DMDBS) is added in an amount from 0.13 wt% to 1.30 wt%.

5. The process according to any of claims 1-5 wherein the article prepared by the process of the present disclosure contain at least 70 wt% , based on the total weight of the article of recycled polypropylene composition.

6. The process according to any of claims 1-6 wherein the article prepared by the process of the present disclosure contain at least 90 wt% , based on the total weight of the article of recycled polypropylene composition.

7. The process according to any of claims 1-6 wherein the propylene based polymer is a polymer containing at least 50 wt%; of derived units of propylene.

8. The process according to any of claims 1-7 wherein the propylene based polymer is a polymer containing at least 60 wt%; of derived units of propylene.

9. The process according to any of claims 1-8 wherein the propylene based polymer is a polymer containing at least 70 wt%; of derived units of propylene.

10. The process according to any of claims 1-9 wherein the propylene based polymer is a polymer containing one or more comonomers selected from the group consisting of ethylene; 1-butene; 1-hexene and 1-octene derived units other than derived units of propylene.

11. The process according to any of claims 1-10 wherein the propylene based polymer is a polymer containing propylene and ethylene.

12. The process according to any of claims 1-11 wherein the propylene based polymer is a polymer containing propylene and ethylene.

13. The process according to any of claims 1-12 wherein the propylene based polymer is one or more polymers selected from the group consisting of propylene homopolymer, propylene, ethylene heterophasic polymer, propylene ethylene 1-butene and propylene ethylene 1-hexene terpolymers.

14. The process according to any of claims 1-13 wherein the article is selected form the group consisting of: film, sheet, pipe, injection molded object, blow molded object, roto molding object and thermoformed object.

15. The process according to any of claims 1-14 wherein the Melt Flow Rate of the recycled polypropylene composition, determined according to the method ISO 1133 (230° C, 2.16 kg), ranges from 10 g/10 min to 150 g/10 min.

**EP 4 296 305 A1**

Europäisches
Patentamt
European
Patent Office
Office européen
des brevets

# EUROPEAN SEARCH REPORT

Application Number

EP 22 18 0367

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/112029 A1 (BASELL POLIOLEFINE ITALIA SRL [IT]) 2 June 2022 (2022-06-02) * paragraphs [0001], [0032], [0038], [0088] * * Comparative Example 2; example 1 * * claims 1-3, 6, 10, 14 * ----- | 1-15 | INV. C08K5/1575 |
| A | US 2022/025150 A1 (KAHLEN SUSANNE [AT] ET AL) 27 January 2022 (2022-01-27) * paragraphs [0001], [0167], [0172], [0176] * * table 1 * * claims 1, 12, 13 * ----- | 1-15 | |
| A | US 2020/339795 A1 (STANDAERT ALAIN [BE] ET AL) 29 October 2020 (2020-10-29) * paragraphs [0001], [0114], [0115] * * example 1 * * claims 16, 17, 24, 30 * ----- | 1-15 | |

|  |  |
|---|---|
| | TECHNICAL FIELDS SEARCHED (IPC) |
| | C08K |

The present search report has been drawn up for all claims

| Place of search | Date of completion of the search | Examiner |
|---|---|---|
| Munich | 30 November 2022 | Neumeier, Michael |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

8

## ANNEX TO THE EUROPEAN SEARCH REPORT
## ON EUROPEAN PATENT APPLICATION NO.

EP 22 18 0367

This annex lists the patent family members relating to the patent documents cited in the above-mentioned European search report.
The members are as contained in the European Patent Office EDP file on
The European Patent Office is in no way liable for these particulars which are merely given for the purpose of information.

30-11-2022

| Patent document cited in search report | | Publication date | Patent family member(s) | | Publication date |
|---|---|---|---|---|---|
| WO 2022112029 | A1 | 02-06-2022 | NONE | | |
| US 2022025150 | A1 | 27-01-2022 | CN | 112714781 A | 27-04-2021 |
| | | | EP | 3861066 A1 | 11-08-2021 |
| | | | KR | 20210042974 A | 20-04-2021 |
| | | | TW | 202024211 A | 01-07-2020 |
| | | | US | 2022025150 A1 | 27-01-2022 |
| | | | WO | 2020070176 A1 | 09-04-2020 |
| US 2020339795 | A1 | 29-10-2020 | EP | 3704191 A1 | 09-09-2020 |
| | | | US | 2020339795 A1 | 29-10-2020 |
| | | | WO | 2019086359 A1 | 09-05-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **C. J. CARMAN ; R. A. HARRINGTON ; C. E. WILKES.** Monomer Sequence Distribution in Ethylene-Propylene Rubber Measured by C NMR. 3. Use of Reaction Probability Mode. *Macromolecules,* 1977, vol. 10, 536

- **M. KAKUGO ; Y. NAITO ; K. MIZUNUMA ; T. MIYATAKE.** Carbon-13 NMR determination of monomer sequence distribution in ethylene-propylene copolymers prepared with $\delta$-titanium trichloride- diethyl-aluminum chloride. *Macromolecules,* 1982, vol. 15, 1150
- **C.J. CARMAN ; R.A. HARRINGTON ; C.E. WILKES.** *Macromolecules,* 1977, vol. 10, 536